(19) **Europäisches Patentamt**
**European Patent Office**
**Office européen des brevets**

(11) **EP 2 736 992 B1**

(12) **EUROPEAN PATENT SPECIFICATION**

(45) Date of publication and mention
of the grant of the patent:
**13.07.2022 Bulletin 2022/28**

(21) Application number: **12762688.5**

(22) Date of filing: **27.07.2012**

(51) International Patent Classification (IPC):
**C09J 7/00** $^{(2018.01)}$

(52) Cooperative Patent Classification (CPC):
**C09J 7/29;** B29L 2031/722; C09J 2433/006;
C09J 2475/006

(86) International application number:
**PCT/US2012/048458**

(87) International publication number:
**WO 2013/016605 (31.01.2013 Gazette 2013/05)**

(54) **LAMINATED SHEET, PART AFFIXED WITH LAMINATED SHEET, AND PROCESS FOR PRODUCTION THEREOF**

VERBUNDFOLIE, AN DER VERBUNDFOLIE ANGEBRACHTES TEIL UND HERSTELLUNGSVERFAHREN DAFÜR

FEUILLE LAMINÉE, PIÈCE FIXÉE AVEC LA FEUILLE LAMINÉE, ET PROCÉDÉ POUR LA PRODUCTION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2011 JP 2011165439**

(43) Date of publication of application:
**04.06.2014 Bulletin 2014/23**

(73) Proprietor: **3M Innovative Properties Company**
**St. Paul, MN 55133-3427 (US)**

(72) Inventors:
• **TSUDA, Koji,**
**Setagaya**
**Tokyo 158-8583 (JP)**
• **TAKAMATSU, Yorinobu,**
**Setagaya**
**Tokyo 158-8583 (JP)**

(74) Representative: **Mathys & Squire**
**Theatinerstraße 7**
**80333 München (DE)**

(56) References cited:
• **DATABASE WPI Week 201044 Thomson Scientific, London, GB; AN 2010-G82917 XP002696151, & JP 2010 131901 A (3M INNOVATIVE PROPERTIES) 17 June 2010 (2010-06-17) cited in the application**
• **DATABASE WPI Week 200428 Thomson Scientific, London, GB; AN 2004-297692 XP002696152, & JP 2003 340986 A (MITSUBISHI RAYON CO LTD) 2 December 2003 (2003-12-02)**

**Description**

Field of the Invention]

The present invention relates to a laminated sheet, a part affixed with a laminated sheet, and a process for production thereof, and more specifically, the present invention relates to a laminated sheet that can be affixed to a substrate by a process of in-mold injection molding, vacuum thermocompression bonding, or the like, a part in which the laminated sheet is affixed to a substrate, and a process for production thereof.

Background

A known method for decorating a surface of an interior part, exterior part, or other three-dimensional substrate of an automobile is to affix a decorative film or sheet on the surface of the substrate. A representative process for affixing a decorative sheet is in-mold injection molding. This is a process in which a decorative sheet having a pattern layer, or the like, formed on a base sheet is set as such, or after pre-molding, in a mold for injection molding, and a molded article having a three-dimensional shape is decorated by integrally affixing the decorative sheet at the same time as the molded article is injection molded.

Another known process for affixing a decorative sheet to a substrate is vacuum thermocompression bonding. Vacuum thermocompression bonding includes vacuum molding and vacuum/compressed-air molding. Vacuum thermocompression bonding may also be used in the case of pre-molding the decorative sheet in the above in-mold injection molding, but the vacuum thermocompression bonding mentioned here indicates a process that is used in order to directly affix a decorative sheet to a substrate of a part.

In vacuum thermocompression bonding, a decorative sheet is affixed using a pressure difference, while being heated and stretched, on a substrate molded in advance. Because the decorative sheet is affixed to the substrate surface of the part in an operation separate from molding, the sheet can be affixed to substrates having various kinds of shapes in a single vacuum thermocompression bonding apparatus. Moreover, vacuum thermocompression bonding is capable of affixing with good conformability with respect to surface roughness of a substrate surface, and is capable of wrap-in covering, that is, continuously covering from an outer surface to an inner surface in the vicinity of an edge part of the substrate. Thus, vacuum thermocompression bonding is a process that can be used to affix a decorative sheet with excellent covering characteristics on three-dimensional substrates having complex and variegated shapes.

Japanese Patent Publication 3956716 describes a decorative sheet in which a transparent thermoplastic resin sheet (B1), a thermoplastic resin sheet (C) containing a colorant, an adhesive layer (D), and a substrate sheet (E) are laminated in this sequence, and a transparent cured resin layer (A) is provided on the transparent thermoplastic resin sheet (B1), the decorative sheet being characterized in that at least one between the transparent thermoplastic resin sheet (B1) and the thermoplastic resin sheet (C) having a colorant is weakly oriented, having a thermal shrinkage stress of 0.1 to 1 MPa in both directions of MD and TD.

Japanese Patent Publication 3137618 describes a laminated film for producing an insertion-molded article, the laminated film having a release film made with a heat-resistant film having a release surface, a transfer layer formed on the release surface of the release film, and a shape-forming film formed on a transfer surface of the transfer layer, the shape forming film being made with a film material having a shape-forming ability allowing an elongation of 150% or higher, expressed by an area after pre-molding divided by an area before pre-molding times 100 (%); the transfer layer having a surface protection layer formed on the transfer surface of the transfer film, which is made with a thermally reactive material of a thermal and active energy radiation-curing resin composition containing as active ingredients a multifunctional isocyanate and a polymer having an equivalent content of (meth)acrylate of 100 to 300 g/eq, having a hydroxyl value of 20 to 500, and having a weight average molecular weight of 5,000 to 50,000; and an affixing layer for adhering the shape-forming film being provided within the transfer layer or between the transfer layer and the shape-forming film.

Japanese Unexamined Patent Application Publication 2010-131901 describes a laminated sheet for affixing to a substrate, including a surface layer (A) disposed on an outermost surface, a thermoplastic resin layer (B), and an adhesive layer (C) to be adhered to the substrate, the surface layer (A) having as a main ingredient a (meth)acrylic resin compound having a glass transition point (Tg) of 80°C or higher and which is formed by mixing a (meth)acrylic copolymer (I) obtained by copolymerizing a (meth)acrylate monomer containing from 0.5% by mass or more to less than 5% by mass of a hydroxyl-group containing monomer, and an isocyanate compound (II) having two or more isocyanate groups per molecule, at a mixture ratio such that the isocyanate groups are from 3 to 16 mmol per 100 g of the (meth)acrylic copolymer (I).

Summary of the Invention

There is a need for a laminated sheet that is thinner, has excellent shape conformability, and is suitable for affixing to a substrate by a process of in-mold injection molding, vacuum thermocompression bonding, or the like. Moreover, there is a need for a laminated sheet that has an outermost surface layer having excellent chemical resistance required according to the use.

It is desirable for a decorative sheet, affixed to a substrate by in-mold injection molding, vacuum thermocompression bonding, or the like, to have excellent extensibility, that is, to have shape conformability with respect to the surface of a substrate having a three-dimensional shape. Meanwhile, the outermost surface layer of the decorative sheet desirably is not easily scarred by objects, human fingers, and the like, and has excellent scratch resistance, chemical resistance, and the like, but establishing these characteristics while at the same time establishing high extensibility is difficult.

The present invention provides a laminated sheet that is thinner, has excellent shape conformability, and is suitable for affixing to a substrate by a process of in-mold injection molding, vacuum thermocompression bonding, or the like. Moreover, the present invention provides a laminated sheet having an outermost surface layer having excellent chemical resistance required according to the use. Moreover, the present invention provides a part affixed with this laminated sheet, as well as a process for production thereof.

According to one aspect of the present invention, a laminated sheet for affixing to a substrate is provided, the laminated sheet including a surface layer disposed on an outermost surface, a heat moldable resin layer, and an adhesive layer to be adhered to the substrate, the surface layer containing a (meth)acrylic copolymer obtained by copolymerizing a monomer blend containing an alkyl (meth)acrylate having an alkyl group having 1 to 4 carbon atoms and one or more kind of (meth)acrylic monomer expressed by formula (1):

$$CH_2=CR^1COR^2 \qquad (1)$$

(wherein $R^1$ is a hydrogen atom or a methyl group, and $R^2$ is a nitrogen-containing group), and the surface layer is in direct contact with the resin layer containing an aqueous polyurethane resin.

According to another aspect of the present invention, a process for production of a part is provided, including a step in which the above laminated sheet is affixed by a process of vacuum thermocompression bonding on a surface of a substrate of a part having that substrate.

According to another aspect of the present invention, a part is provided, on which the above laminated sheet is affixed on a surface of a substrate of a part having that substrate.

[Effect of the Invention]

According to one aspect of the present invention, by including one or more kind of (meth)acrylic monomer expressed by formula (1):

$$CH_2=CR^1COR^2 \qquad (1)$$

(wherein $R^1$ is a hydrogen atom or a methyl group, and $R^2$ is a nitrogen-containing group) in the monomer blend used to obtain the (meth)acrylic copolymer contained in the surface layer, the surface layer can be bonded with high adhesive strength in direct contact with the heat moldable resin layer without using an additional adhesive layer. Therefore, the number of layers constituting the laminated sheet can be reduced, and a laminated sheet that is thinner and has excellent shape conformability can be provided at a lower cost than the conventional article.

According to another aspect of the present invention, a part can be produced that can be applied with a favorable wrap-in covering by the above laminated sheet on the surface of the substrate, as well as at the edge parts of the substrate, such that there is no cracking, breaking, or the like, and such a part can be provided.

Brief Description of the Drawings

FIG. 1 illustrates a sectional view of a laminated sheet of one embodiment of the present invention.

FIG. 2 is a sectional view illustrating the structure of a part affixed with the laminated sheet of one embodiment of the present invention.

FIG. 3 is a sectional view illustrating the laminated sheet of another embodiment of the present invention.

FIG. 4 is a sectional view illustrating the laminated sheet of another embodiment of the present invention.

FIG. 5 is a sectional view illustrating the laminated sheet of another embodiment of the present invention.

FIG. 6 is a sectional view illustrating the laminated sheet of another embodiment of the present invention.

FIG. 7 is a sectional view illustrating the laminated sheet of another embodiment of the present invention.

FIGS. 8A to 8E are diagrams schematically illustrating steps for applying a laminated sheet onto a substrate using a vacuum thermocompression bonding apparatus.

Detailed Description of the Embodiments

The laminated sheet of an embodiment (hereinafter referred to as "the present embodiment") of the present invention is a laminated sheet that is used for affixing to a substrate, and this laminated sheet includes a surface layer disposed on an outermost surface, a heat moldable resin layer, and an adhesive layer to be adhered to the substrate. Here, the surface layer of the laminated sheet contains a (meth)acrylic copolymer obtained by copolymerizing a monomer blend containing an alkyl (meth)acrylate having an alkyl group having 1 to 4 carbon atoms and one or more kind of (meth)acrylic monomer expressed by formula (1):

$$CH_2=CR^1COR^2 \qquad (1)$$

(wherein $R^1$ is a hydrogen atom or a methyl group, and $R^2$ is a nitrogen-containing group), and the surface layer is in direct contact with the resin layer containing an aqueous polyurethane resin.

The laminated sheet of the present embodiment is suitable for use as a decorative sheet for decorating the surfaces of substrates having various shapes using insertion injection molding, vacuum thermocompression bonding, or the like; however, the laminated sheet is not limited to a decorative purpose, for example, a protective sheet for preventing scratching or contamination of a substrate or for another purpose is included, and the purpose for affixing to the surface of the substrate is not limited.

The laminated sheet of the present embodiment is described specifically below while referring to the drawings, but in the present specification, the concept of "sheet" includes a flexible laminated body, and a thin laminated body referred to as "film" also is included.

In the present specification, "(meth)acrylic" signifies acrylic and methacrylic, and "(meth)acrylate" signifies acrylate and methacrylate. In the present specification, a (meth)acrylic polymer may be a copolymer containing units originating from monomers other than (meth)acrylic-based monomers, for example, vinyl unsaturated monomers.

In the present specification, "wrap-in covering" refers to a mode of covering in which, for example, an end part of a substrate is covered by a laminated sheet continuously from an outer surface of the substrate to an inner surface of the substrate, when the laminated sheet is affixed on the surface of the substrate, typically by vacuum thermocompression bonding. Here, "inner surface" includes a surface in a position not normally visible when observed from the outer surface side of the part.

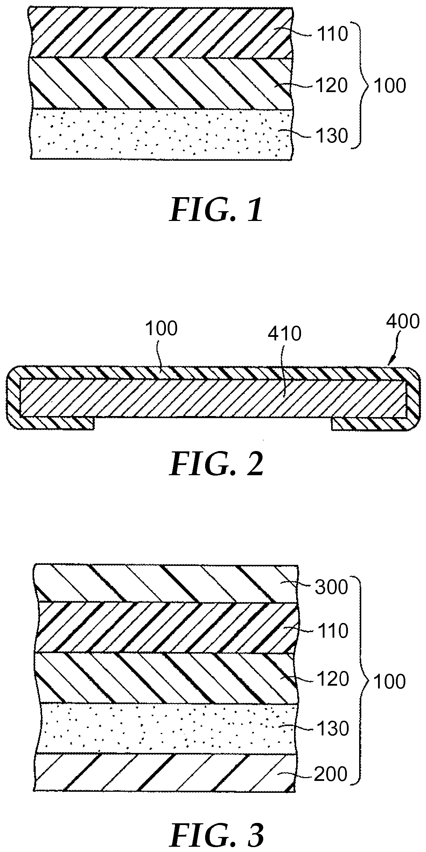

FIG. 1 is a sectional view illustrating a laminated sheet 100 of one embodiment of the present invention. FIG. 2 is a sectional view of one example of a part 400 in which this laminated sheet 100 is affixed on a substrate 410, and is an example in which the substrate is wrap-in covered by the laminated sheet 100.

As illustrated in FIG. 1, the laminated sheet 100 includes a surface layer 110 disposed on an outermost surface of the laminated sheet, a heat moldable resin layer 120, and an adhesive layer 130 to be adhered to the substrate. On the laminated sheet 100 before affixing to the substrate 410, a release sheet 200 may be affixed to an exposed surface of the adhesive layer 130 as illustrated in FIG. 3. Moreover, the exposed surface of the surface layer 110 may be in a condition in which a removable support sheet 300 for use during manufacturing is affixed as needed.

The surface layer contains a (meth)acrylic copolymer, and the (meth)acrylic copolymer is obtained by copolymerizing a monomer blend containing an alkyl (meth)acrylate having an alkyl group having 1 to 4 carbon atoms and one or more kind of (meth)acrylic monomer expressed by formula (1):

$$CH_2=CR^1COR^2 \qquad (1)$$

(wherein $R^1$ is a hydrogen atom or a methyl group, and $R^2$ is a nitrogen-containing group), and the surface layer is in direct contact with the resin layer containing an aqueous polyurethane resin.

Solution polymerization such as solution radical polymerization, suspension polymerization, emulsion polymerization, block polymerization, or the like, can be used during preparation of the (meth)acrylic copolymer. The (meth)acrylic copolymer can be obtained, for example, by mixing the above monomer blend with a polymerization initiator in a solvent such as ethyl acetate or the like, heating to a prescribed temperature, and polymerizing. Examples of polymerization initiators that can be used include organic peroxides such as benzoyl peroxide, lauroyl peroxide, and bis(4-tert-butylcyclohexyl) peroxydicarbonate, and azo-based polymerization initiators including 2,2'-azobis-isobutyronitile, 2,2'-azobis-2-methylbutyronitrile, 4,4'-azobis-4-cyanovaleric acid, dimethyl 2,2'-azobis(2-methylpropionate), azobis-2,4-dimethylvaleronitrile (AVN), and the like. The quantity of polymerization initiator used can be from 0.05 to 5 parts by mass per 100 parts by mass of the monomer blend.

Examples of alkyl (meth)acrylates having an alkyl group having 1 to 4 carbon atoms include methyl (meth)acrylate, ethyl (meth)acrylate, n-propyl (meth)acrylate, isopropyl (meth)acrylate, n-butyl (meth)acrylate, and tert-butyl (meth)acrylate, and the like, and two or more kinds may be used in combination. As is described later, it is advantageous that the glass transition point (Tg) of the (meth)acrylic copolymer be at or above a prescribed temperature in order to form a surface layer having excellent chemical resistance, scratch resistance, impression recovery, and other characteristics, and therefore methyl methacrylate, which can form a copolymer having high crystallinity, is preferably contained in the monomer blend. The alkyl (meth)acrylate having an alkyl group having 1 to 4 carbon atoms can be used at about 30 parts by mass or higher, about 40 parts by mass or higher, or about 50 parts by mass or higher, and about 99.9 parts by mass or lower, about 99.5 parts by mass or lower, or about 99 parts by mass or lower, when the monomer blend is 100 parts by mass.

In the (meth)acrylic monomer in formula (1), $R^1$ is an oxygen atom or a methyl group, and $R^2$ is a nitrogen-containing group). Two or more kinds of (meth)acrylic monomers in formula (1) may be used in combination. The (meth)acrylic monomer in formula (1) may be used at about 0.1 parts by mass or higher, about 0.5 parts by mass or higher, or about 1 parts by mass or higher, and about 70 parts by mass or lower, about 60 parts by mass or lower, or about 50 parts by mass or lower, when the monomer blend is 100 parts by mass.

By using a (meth)acrylic monomer in which $R^2$ is a hydroxyl group or a nitrogen-containing group, a laminated sheet can be prepared, in which the heat moldable resin layer to be described below and the surface layer are bonded in direct contact with high adhesive strength without using an additional adhesive layer. Therefore, the number of layers constituting the laminated sheet can be reduced, and a laminated sheet that is thinner and has excellent shape conformability can be provided at a lower cost than the conventional article. Examples of such (meth)acrylates that can be used include: monomers in which $R^2$ is a nitrogen-containing group, for example, an amino group, including N,N-dimethylaminoethyl acrylate (DMAEA), N,N-dimethylaminoethyl methacrylate (DMAEMA), and other aminoalkyl (meth)acrylates; monomers in which $R^2$ is an amide group, including N,N-dimethyl acrylamide (DMAA), N,N-dimethyl methacrylamide (DMMAA), N,N-dimethylaminopropyl acrylamide (DMAPAA), N,N-dimethylaminopropyl methacrylamide, and other dialkylaminoalkyl (meth)acrylamides; and monomers in which $R^2$ is a nitrogen-containing heterocyclic ring, including 2-(1-imidazolyl) ethyl (meth)acrylate, 2-(4-morpholinyl) ethyl (meth)acrylate, and 1-(2-methacryloyloxyethyl)-2-pyrrolidone. Also, in the case when using a (meth)acrylic monomer in which $R^2$ is a nitrogen-containing group, a (meth)acrylic monomer containing an amide group is desirably used in uses where weather resistance is required because yellowing tends not to occur. The (meth)acrylic monomer in which $R^2$ is a nitrogen-containing group generally can be used at about 0.1 parts by mass or higher, about 0.5 parts by mass or higher, or about 1 part by mass or higher, and about 30 parts by mass or lower, about 25 parts by mass or lower, or about 20 parts by mass or lower, when the monomer blend is 100 parts by mass.

By using in combination a (meth)acrylic monomer in which $R^2$ is a nitrogen-containing group and a (meth)acrylic monomer in which $R^2$ is an alkoxy group having 5 or more carbon atoms or a cycloalkoxy group having 5 or more carbon atoms, as a monomer blend, a laminated sheet can be obtained that has an outermost surface layer having excellent chemical resistance and also that is thinner and has excellent shape conformability, as mentioned above.

Other polymerizable monomers may be included in the above monomer blend within a range that does not impede the characteristics of the laminated sheet. Examples of such other polymerizable monomers that can be used include (meth)acrylic monomers other than those mentioned above, and vinyl acetate, vinyl propionate, styrene, and other vinyl monomers.

The above (meth)acrylic copolymer may be crosslinked using a crosslinking agent. When the (meth)acrylic copolymer is crosslinked, the strength of the surface layer can be increased, and the scratch resistance, chemical resistance, and the like, can be improved. A crosslinking agent having two or more intramolecular functional groups that can react with the functional groups contained in the above (meth)acrylic copolymer can be used. Examples of such crosslinking agents include isocyanate crosslinking agents, epoxy crosslinking agents, aziridine crosslinking agents, bisamide crosslinking agents, oxazoline crosslinking agents, metal chelate crosslinking agents, and the like. A (meth)acrylic copolymer crosslinked with an isocyanate crosslinking agent is desirably used because the surface layer can be provided with excellent properties including impact resistance, scratch resistance, and the like due to the urethane bonds contained in the crosslinked (meth)acrylic copolymer.

In the case when using an isocyanate crosslinking agent, a (meth)acrylic copolymer having a hydroxyl group that reacts with the isocyanate group can be used. Such (meth)acrylic copolymer can be obtained by copolymerizing the above monomer blend having further added a hydroxyl group-containing monomer thereto. Two or more kinds of hydroxyl group-containing monomers may be used in combination. The hydroxyl group-containing monomer can be used at about 0.2 parts by mass or higher, about 0.5 parts by mass or higher, or about 1 part by mass or higher, and about 5 parts by mass or lower, about 4 parts by mass or lower, or about 3 parts by mass or lower, when the monomer blend is 100 parts by mass. By prescribing the quantity used of hydroxyl group-containing monomer as 5 parts by mass or lower, crosslinking of the (meth)acrylic copolymer does not progress excessively, and as a result, the extensibility of the surface layer can be further increased, and the shape conformability of the laminated sheet can be improved.

Examples of such hydroxyl group-containing monomers include: hydroxyethyl (meth)acrylate, hydroxybutyl (meth)acrylate, and other hydroxyalkyl (meth)acrylates having 2 to 8 carbon atoms; hydroxyethyl vinyl ether and other hydroxyalkyl vinyl ethers; ethylene glycol, 1,6-hexanediol, neopentyl glycol, polyethylene glycol, polypropylene glycol, polybutylene glycol, and other hydroxyl group-containing (meth)acrylates obtained by partial esterification reaction of diol compounds and (meth)acrylic acid; and hydroxyl group-containing (meth)acrylates and the like obtained by reacting glycidyl (meth)acrylate with acetic acid, propionic acid, p-tert-butylbenzoic acid, fatty acids, and other acids, or alkylamines and other monoamines.

Furthermore, a (meth)acrylic copolymer can be used, in which the side chain length is elongated and hydroxyl groups are introduced to the terminal by using hydroxyl groups originating from the above hydroxyl-group containing monomers. The side chain structure and the introduction method are not particularly limited, but for example, a structure having hydroxyl groups can be introduced to the terminal by performing ring-opening addition of lactone to the hydroxyl groups originating from the hydroxyl group-containing monomers. The degree of polymerization of the lactone introduced to the side chain may be 1 or higher, and from the viewpoint of obtaining sufficient reactivity during crosslinking, the degree of polymerization of the side chain is preferably from 1 to 10, and is more preferably from 1 to 5.

The (meth)acrylic copolymer having a hydroxyl group can be crosslinked by mixing with an isocyanate crosslinking agent and carrying out a polymerization addition reaction. A publicly known curing catalyst may be used as needed when carrying out the polymerization addition reaction, and the curing catalyst is not particularly limited. The isocyanate crosslinking agent generally is an isocyanate compound having two or more isocyanate groups per molecule. Two or more kinds of isocyanate compounds may be used in combination.

The isocyanate compound is used in a quantity such that the isocyanate groups become about 1 mmol or higher, about 2 mmol or higher, or about 3 mmol or higher, and about 50 mmol or lower, about 30 mmol or lower, or about 20 mmol or lower, per 100 g of the (meth)acrylic copolymer. Also by prescribing the quantity used of isocyanate compound as the above range, excessive crosslinking of the (meth)acrylic copolymer can be suppressed, the surface layer can be provided with high extensibility, and the shape conformability of the laminated sheet can be improved. In the case when high extensibility, for example, extensibility of 300% by area or higher or 400% by area or higher at 120°C, is required for the laminated sheet, the isocyanate compound is desirably mixed at a quantity such that the isocyanate groups become about 20 mmol or lower per 100 g of the (meth)acrylic copolymer.

Examples of such isocyanate compounds that can be used include: hexamethylene diisocyanate and other aliphatic diisocyanates; hydrogenated xylylene diisocyanate, cyclohexylene diisocyanate, isophorone diisocyanate, and other alicyclic diisocyanates; tolylene diisocyanate, naphthalene diisocyanate, and other aromatic diisocyanates; 2,4,6-cycloheptane triisocyanate, 1,2,5-cyclooctane triisocyanate, and other aliphatic triisocyanates; and 1,3,5-benzene triisocyanate, 2,4,6-naphthalene triisocyanate, and other aromatic triisocyanates.

Examples of polyisocyanate compounds having three or more isocyanate groups per molecule that can be used include: dimers or trimers of divalent or higher polyisocyanates; adducts obtained by reacting these divalent, trivalent, or higher polyisocyanates with polyhydric alcohol, polyester resin having a terminal hydroxyl group, or the like, with the condition of excess isocyanate groups; block polyisocyanates obtained by blocking free isocyanate groups of isocyanate compounds having free isocyanate groups with phenols, oximes, lactams, alcohols, mercaptans, or other blocking agents; polyisocyanates having a biuret structure obtained by reacting polyisocyanates having free isocyanate groups with water, and the like. Multifunctional polyisocyanates in which residues of isocyanate groups of the above polyisocyanates are connected using various kinds of polyol compounds furthermore can be used.

In the case when the (meth)acrylic copolymer has a functional group having active hydrogen, that is, in the case when, in the (meth)acrylic monomer in formula (1), $R^2$ is a hydroxyl group, or $R^2$ is a nitrogen-containing group having active hydrogen, for example, a primary or secondary amine group, an unsubstituted or mono-substituted amide group, or the like, the (meth)acrylic copolymer can be crosslinked with an epoxy crosslinking agent. A common, commercially available epoxy crosslinking agent can be used as the crosslinking agent, and a four-functional epoxy crosslinking agent is preferably used. Examples of epoxy crosslinking agents include E-5XM, manufactured by Soken Chemical & Engineering Co., Ltd., and TETRAD X and TETRAD C, manufactured by Mitsubishi Gas Chemical Co., Ltd.. The epoxy crosslinking agent can be mixed in a quantity such that the epoxy groups become about 1 mmol or higher, about 2 mmol or higher, or about 3 mmol or higher, and about 50 mmol or lower, about 30 mmol or lower, or about 20 mmol or lower, per 100 g of the (meth)acrylic copolymer.

The molecular weight of the (meth)acrylic copolymer in the state not yet being crosslinked is not particularly limited, but generally can be about 20,000 or higher or about 50,000 or higher, and about 1,200,000 or lower or about 600,000 or lower, in weight average molecular weight. A (meth)acrylic copolymer having a molecular weight lower than the above range also can also be crosslinked and used.

The glass transition point (Tg) of the (meth)acrylic copolymer, crosslinked as needed, is desirably about 80°C or higher. The (meth)acrylic copolymer having such glass transition point exhibits crystallinity, for example, at a temperature that can be imagined in automotive use, for example, at about -20°C to about 70°C, and the structure itself is denser, and therefore, not only are chemical resistance and scratch resistance improved, but also an impression recovery ability, which is a property such that an impression does not remain even when pressed with a finger, or the like, is increased.

For example, in the case when affixing the laminated sheet to a substrate by using vacuum thermocompression bonding, or the like, the affixing temperature is often adjusted to about 110°C to about 150°C, and generally about 120°C, considering the heat resistance of the substrate. The glass transition point (Tg) of the (meth)acrylic copolymer is desirably in a range not exceeding at least this affixing temperature, and may be about 90°C or higher or about 105°C or higher, provided that it is at or below the affixing temperature.

The glass transition point (Tg) of the (meth)acrylic copolymer can be adjusted in accordance with the kinds, mixture ratios, and the like, of alkyl (meth)acrylates having an alkyl group having 1 to 4 carbon atoms, (meth)acrylic monomers in formula (1), hydroxyl group-containing monomers used as needed, and other polymerizable monomers, contained in the monomer mixture used when preparing the (meth)acrylic copolymer.

Representative glass transition points (Tg) of the above alkyl (meth)acrylates, (meth)acrylic monomers expressed by formula (1), hydroxyl group-containing monomers, and other polymerizable monomers are given below. The glass transition points (Tg) here are the glass transition points (Tg) of homopolymers obtained by polymerizing the monomers singly.

Glass transition point (Tg) 80°C or higher: methyl methacrylate (Tg = 105°C), tert-butyl methacrylate (Tg = 107°C), cyclohexyl methacrylate (Tg = 83°C), isobornyl methacrylate (Tg = 155°C), isobornyl acrylate (Tg = 94°C), dicyclopentenyl acrylate (Tg = 120°C), dicyclopentanyl acrylate (Tg = 120°C), dicyclopentanyl methacrylate (Tg = 175°C)

Glass transition point less than 80°C: methyl acrylate (Tg = 8°C), ethyl acrylate (Tg = -22°C), butyl acrylate (Tg = -56°C), isobutyl acrylate (Tg = -26°C), tert-butyl acrylate (Tg = 41°C), isoamyl acrylate (Tg = -45°C), cyclohexyl acrylate (Tg = 15°C), 2-ethylhexyl acrylate (Tg = -70°C), lauryl acrylate (Tg = -3°C), ethyl methacrylate (Tg = 65°C), butyl methacrylate (Tg = 20°C), isobutyl methacrylate (Tg = 48°C), 2-ethylhexyl methacrylate (Tg = -10°C), lauryl methacrylate (Tg = -65°C), 2-methoxyethyl acrylate (Tg = -50°C), ethylcarbitol acrylate (Tg = -67°C), tetrahydrofurfuryl acrylate (Tg = -12°C), tetrahydrofurfuryl methacrylate (Tg = 60°C), benzyl acrylate (Tg = 6°C), benzyl methacrylate (Tg = 54°C), phenoxyethyl acrylate (Tg = -22°C)

The surface layer has the above (meth)acrylic copolymer as a main ingredient, but additives may furthermore be added within ranges in which the operation and effect of the laminated sheet of the present embodiment can be exhibited. Examples of such additives that can be used include anti-wear agents, surface adjusters (leveling agents, antifoam agents, anti-blocking agents, and the like), light fastness additives (ultraviolet absorbers, stabilizers, and the like), plasticizers, pigments, antioxidants, anti-static agents, flame retardants, lubricants, antifungal agents, antimicrobial agents, non-reactive resins, synthetic rubbers, dispersing agents, and the like.

Organic oxide particles dispersible in organic solvents may be added in particular in order to improve the scratch resistance and chemical resistance while maintaining the transparency of the surface layer. Examples of metal compounds dispersible in organic solvents that can be used include titanium oxide, tin oxide, zirconia, silicon oxide (silica), aluminum oxide, zinc oxide, and the like.

The thickness of the surface layer of the present embodiment is not particularly limited, but for example, in order to obtain sufficient scratch resistance, the thickness is preferably about 20 $\mu$m or higher or about 30 $\mu$m or higher, and furthermore may be about 50 $\mu$m or higher. Moreover, in order to express favorable extensibility when affixing to a substrate, the thickness is preferably about 100 $\mu$m or lower or about 80 $\mu$m or lower.

The surface layer can be formed by adding crosslinking agents, polymerization initiators, solvents, or the like, as needed to the above (meth)acrylic copolymer to prepare a composition, coating a support sheet or resin layer with the composition by various kinds of methods, and heating. The thickness of the surface layer can be adjusted in accordance with the viscosity of the composition, the coating method, the number of iterations of coating, and the like.

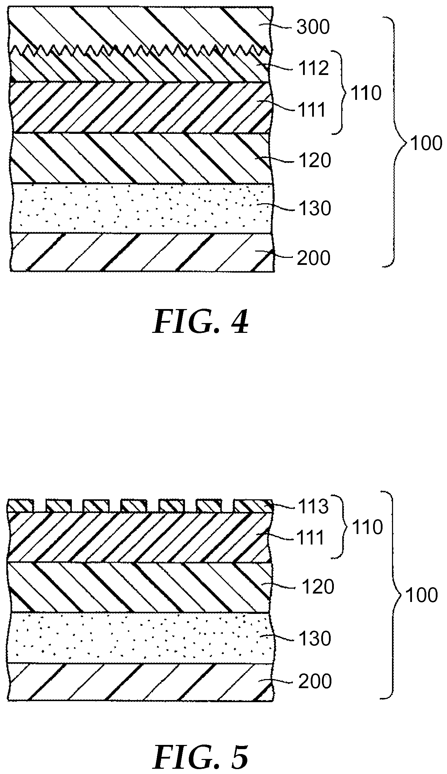

Moreover, the surface layer is not limited to a single layer, and a plurality of two or more layers may be formed. The ingredients other than the main ingredients may be changed for each layer. Moreover, the surface layer may be one in which at least one decorative layer is added. For example, as illustrated in FIG. 4, a surface layer 110 may have a laminated structure having a primer surface layer 111 and a surface layer 112 having a three-dimensional structure on the exposed surface. For example, the exposed surface of the surface layer 112 may be embossed. A matte appearance can be obtained using fine surface roughness, and striped grooves having a hairline pattern or other design characteristics also can be formed. In addition, geometric, pearskin, sand grain, sand ripple, woven patterns, cloth grain, characters, and other patterns can be provided by surface roughness of the surface layer as desired. Alternatively, beads, metal grains, or the like, may be contained in the surface layer 112.

The method for forming a three-dimensional structure on such surface layer 112 is not particularly limited, but as a representative example, a method can be used, in which a support sheet 300 having surface roughness is used, and the surface layer 112 is formed by coating thereon, whereby the surface roughness of the support sheet is easily transferred to the surface layer 112. The surface roughness formed on the surface layer 112 by this method is subject to little residual stress produced during formation, and therefore the shape maintenance is high, and the surface roughness shape does not tend to be deformed or disappear even due to heating or stretching during affixing.

Alternatively, as illustrated in FIG. 5, the surface layer 110 may have a laminated structure having the primer surface layer 111 and a printed layer 113 having a decorative pattern formed by gravure printing, or the like. For example, a printed pattern containing beads or pigment may be formed as the printed layer 113. Furthermore, although not illustrated, a decorative layer arranged with coloring or a pattern by gravure printing, or the like, may be formed between the primer surface layer 111 and the surface layer 112 having a three-dimensional structure. Diverse decorations that are more complex decorations, for example, grain patterns, leather patterns, three-dimensional patterns, and the like, can be applied singly or in combinations, by the presence of these various kinds of decorative layers.

The heat moldable resin layer is next described. As illustrated in FIG. 1, the heat moldable resin layer 120 is disposed between the surface layer 110 and the adhesive layer 130. As described above, in the embodiment in which the (meth)acrylic copolymer contained in the surface layer is obtained by copolymerizing a polymer blend containing (meth)acrylic monomers in which $R^2$ in formula (1) is a hydroxyl group or a nitrogen-containing group, there is no need to dispose a second adhesive layer between the heat moldable resin layer 120 and the surface layer 110. In another embodiment, a second adhesive layer may be disposed between the resin layer 120 and the surface layer 110. Moreover, as described later, a decorative layer with printing or colors, a primer layer, or the like, may be further provided between each layer.

There is no limitation in particular to the thermoplastic resin constituting the heat moldable resin layer, for example, a single layer or a unilamellar mixture of two or more kinds, or a laminate of two or more layers of the following can be used: acrylonitrile-butadiene styrene (ABS) resin, acrylonitrile-acrylic rubber-styrene (AAS) resin, acrylonitrile-ethylene rubber styrene (AES) resin, polyethylene (PE), polypropylene (PP), and other polyolefinic resins; polyethylene terephthalate (PET) and other polyester resins; acrylic resin, vinyl chloride (PVC) resin, and other general-purpose resins; or styrene resin, urethane resin, polyamide resin, and other thermoplastic resins.

The heat moldable resin layer desirably exhibits extensibility at least equal to or higher than that of the surface layer when affixing the laminated sheet on the surface of the substrate. For example, the resin layer desirably has an extensibility of about 300% by area or higher, about 400% by area or higher, or about 600% by area at the temperature during affixing, that is, at about 100°C to about 150°C, and generally about 120°C. For example, the resin layer desirably has favorable moldability in which breaking or cracking does not occur even when stretched at about 600% by area at about 120°C, and examples of such heat moldable resin layers include polyurethane resins and polyester resins.

Examples of polyurethane resins include resins obtained by carrying out a polymerization addition reaction between polyhydroxy compounds and polyisocyanate compounds. Here, specific examples of polyhydroxy compounds include: polyester polyols containing products of condensation reactions between phthalic acid, isophthalic acid, adipic acid, maleic acid, and other polybasic acids and ethylene glycol, propylene glycol, butylene glycol, diethylene glycol, trimethylol propane, glycerol, pentaerythritol, and other polyhydroxy compounds; polycaprolactone and other lactone-based polyester polyols; polyhexylene carbonate diol, polynonylene carbonate diol, polycyclohexylene carbonate diol, polydimethylcyclohexyl carbonate diol, and other polycarbonate polyols; and polyoxypropylene glycol, polyoxyethylene polyoxypropylene glycol, polyoxytetramethylene glycol, and other polyether polyols. Acrylic polyols, castor oil derivatives, and the like, are furthermore included. Moreover, ethylene glycol, propylene glycol, butanediol, neopentyl glycol, cyclohexane dimethanol, and other hydroxy compounds, and dimethylolpropionic acid, dimethylolbutanoic acid, and other carboxyl group-containing hydroxy compounds also are included.

Examples of polyisocyanate compounds include toluene diisocyanate, diphenylmethane diisocyanate, xylylene diisocyanate, hexamethylene diisocyanate, dicyclohexylmethane diisocyanate, isophorone diisocyanate, and bis(methylisocyanate) cyclohexane.

Examples of polyester resins include those containing products of condensation reactions between phthalic acid, isophthalic acid, adipic acid, maleic acid, and other polybasic acids and ethylene glycol, propylene glycol, butylene glycol, diethylene glycol, trimethylol propane, glycerol, pentaerythritol, and other polyhydroxy compounds.

It is advantageous that the resin layer contain an aqueous polyurethane resin, because the resin layer can be bonded with higher adhesive strength with the surface layer containing the (meth)acrylic copolymer obtained by copolymerizing a polymer blend containing (meth)acrylic monomers in which $R^2$ in formula (1) is a nitrogen-containing group. There is no theoretical constraint whatsoever, but it is thought that such meth(acrylic) copolymer tends to bond more firmly chemically because the aqueous polyurethane resin has a carboxyl group or other polar group in the polyurethane molecule.

The thickness of the heat moldable resin layer is not particularly limited, but it should be possible to maintain sufficient pliability and assure moldability when affixing the laminated sheet on the substrate, and for example, the thickness can be about 300 μm or lower or about 200 μm or lower. On the other hand, a desirable thickness is such that a function as a stress relief layer for alleviating stress produced in the laminated sheet can be exhibited when affixing the laminated sheet on the substrate, and for example, the thickness can be about 10 μm or higher, about 20 μm or higher, or about 30 μm or higher.

The heat moldable resin layer can be formed, for example, by applying a coating of a solution or dispersion of the coating dissolved or dispersed in water or an organic solvent onto a liner or another layer of the laminated sheet. The film thickness can be adjusted by controlling the viscosity of the coating solution or dispersion, the coating method, the number of iterations of coating, and the like.

The adhesive layer used in the present embodiment is next described. As illustrated in FIG. 1, the adhesive layer 130 is positioned on the inner surface of the laminated sheet 100, and the exposed surface thereof is normally covered by a release sheet 200 before affixing on a substrate. The laminated sheet 100 of the present embodiment is fixed to a substrate 410 with the adhesive layer 130 in direct contact with the substrate 410 when affixing the laminated sheet 100 on the substrate 410 as illustrated in FIG. 2.

The material of the adhesive layer is not particularly limited, but examples include acrylic-based, polyester-based, urethane-based, rubber-based, and silicone-based adhesives, and other general-purpose adhesives. Acrylic-based adhesives are particularly preferable among these for reasons of heat resistance and durability.

The laminated sheet is often exposed to high temperature when affixing to the substrate. For example, in the case when affixing to the substrate by using vacuum thermocompression bonding, the laminated sheet may be locally subject to extremely great stretching of about 300% by area or higher at a high temperature of about 100°C or higher or about 120°C or higher, and therefore extremely great stress may be applied under high temperature to the adhesive layer. Therefore, the adhesive layer desirably is capable of maintaining sufficient adhesive strength to the substrate even under these conditions.

In consideration of the above conditions, the adhesive layer desirably is made using an acrylic-based adhesive containing (a) a carboxyl group-containing (meth)acrylic polymer in which a ratio of the number of repeating units containing the carboxyl groups to the total number of repeating units of the polymer is about 4.0% or higher and about 25% or lower and the glass transition point (Tg) is about 25°C or lower, and (b) an amino group-containing (meth)acrylic polymer in which a ratio of the number of repeating units containing the amino groups to the total number of repeating units of the polymer is about 3.5% or higher and about 15% or lower and the glass transition point (Tg) is about 75°C or higher. The compounding ratio of ingredient (a) to ingredient (b) is from 62:38 to 75:25 by mass ratio.

For example, in the case when the laminated sheet was affixed on the substrate by using vacuum thermocompression bonding, stretching greater than about 300% by area may occur locally under high temperature, and residual stress may remain in the stretched portion during cooling after affixing. In the case when the above acrylic-based adhesive is used as the adhesive layer, the adhesive strength is maintained even in the case when residual stress is present, and the laminated sheet can be fixed securely to the substrate.

The (meth)acrylic polymers are constituted using as main ingredients monoethylenic unsaturated monomers generally expressed by formula (2):

$$CH_2=CR^3COOR^4 \qquad (2)$$

(wherein $R^3$ is hydrogen or a methyl group, and $R^4$ is a straight-chain, branched, or annular alkyl group, phenyl group, alkoxy group, alkoxyalkyl group, phenoxyalkyl group, or the like), however, styrene, alpha-methyl styrene, vinyl toluene, and other aromatic vinyl monomers, vinyl acetate and other vinyl esters, and the like, can also be used in addition. Examples of such monomers that can be used include: methyl (meth)acrylate, ethyl (meth)acrylate, n-butyl (meth)acrylate, isobutyl (meth)acrylate, tert-butyl (meth)acrylate, n-hexyl (meth)acrylate, isoamyl (meth)acrylate, cyclohexyl (meth)acrylate, 2-ethylhexyl (meth)acrylate, isooctyl (meth)acrylate, isononyl (meth)acrylate, isobornyl (meth)acrylate, dicyclopentanyl (meth)acrylate, decyl (meth)acrylate, lauryl (meth)acrylate, and other alkyl (meth)acrylates; phenoxyethyl (meth)acrylate and other phenoxyalkyl (meth)acrylates; methoxypropyl (meth)acrylate, 2-methoxybutyl (meth)acrylate, and other alkoxyalkyl (meth)acrylates; and one or two or more kinds can be suitably used in accordance with the purpose in order to obtain the desired glass transition point, adhesiveness, hot adhesiveness, hot holding strength, and the like. The monoethylenic unsaturated monomers preferably are alkyl (meth)acrylates (a preferable number of carbon atoms of the alkyl group is 1 to 12).

Ingredient (a) is a (meth)acrylic polymer having a glass transition point (Tg) of 25°C or lower, and is a soft ingredient. Although this soft ingredient (a) itself has tackiness at normal temperature, the composition mixed with ingredient (b) in the above quantity hardly exhibits tackiness at normal temperature. However, when there is no content or little content of this soft ingredient (a), the wettability of the adhesive on the adherend surface is low, the adhesive tends not to spread on the adherend surface, and the adhesive layer easily separates from the substrate when cooled to normal temperature after thermocompression bonding of the laminated sheet.

A (meth)acrylic polymer having a glass transition point (Tg) of 25°C or lower can be easily provided by using as a main ingredient a monomer for which the glass transition point (Tg) of a homopolymer thereof becomes 25°C or lower. Examples of such monomers include methyl acrylate, ethyl acrylate, n-butyl acrylate, isobutyl acrylate, isoamyl acrylate, 2-ethylhexyl (meth)acrylate, isooctyl (meth)acrylate, and dodecyl (meth)acrylate. In consideration of the adhesiveness at room temperature and the cohesiveness at high temperature, a preferable range of Tg of the (meth)acrylic polymer is from 0°C to -50°C.

Furthermore, ingredient (a) is a carboxyl group-containing (meth)acrylic polymer. When ingredient (a) contains carboxyl groups and ingredient (b) contains amino groups, the compatibility between ingredient (a) and ingredient (b) is improved, and phase separation between ingredient (a) and ingredient (b) in the adhesive composition can be avoided. When phase separation occurs between ingredient (a) and ingredient (b), the desired adhesiveness and holding strength at high temperature cannot be obtained even when ingredient (a) and ingredient (b) are mixed. In order to obtain this desired compatibility, the quantity of carboxyl groups contained in the (meth)acrylic polymer of ingredient (a) is preferably such that the ratio of the number of repeating units containing the carboxyl groups to the total number of repeating units of the polymer is from 4.0% to 25% (the quantity of carboxyl groups may also be expressed as mol%).

By copolymerizing the carboxyl group-containing unsaturated monomer with the above ethylenic unsaturated monomer, the carboxyl groups can be contained in the (meth)acrylic polymer. Examples of such monomers that can be used include acrylic acid, methacrylic acid, maleic acid, itaconic acid, omega-carboxypolycaprolactone mono(meth)acrylate, beta-carboxyethyl (meth)acrylate, 2-(meth)acryloyloxyethyl succinic acid, 2-(meth)acryloyloxyethyl hexahydrophthalic acid, and the like. In consideration of resistance to yellowing, the carboxyl group-containing unsaturated monomer is preferably (meth)acrylic acid, omega-carboxypolycaprolactone mono(meth)acrylate, or beta-carboxyethyl (meth)acrylate.

The molecular weight of the carboxyl group-containing (meth)acrylc polymer of ingredient (a) is not particularly limited, but generally can be from about 100,000 to about 1,000,000 or from about 200,000 to about 800,000 in weight average molecular weight. When the weight average molecular weight is small, the cohesiveness drops, and when large, the compatibility tends to drop, but there is no limit in particular, provided that the polymer satisfies the conditions for ingredient (a).

Ingredient (b) is a (meth)acrylic polymer having a glass transition point (Tg) of 75°C or higher, and is a hard ingredient. When there is no content or little content of this hard ingredient (b), the adhesive is tacky at normal temperature, the heat resistance is low, and the hot adhesiveness and/or hot holding strength are insufficient. By including ingredient (b) having a glass transition point of 75°C or higher, the adhesive can exhibit tackiness during heated adhesion. In this manner, even when the laminated sheet is stretched at high temperature when being affixed on the substrate and contracts due to residual stress thereafter, the adhesive layer can withstand the contraction and the laminated sheet can be prevented from shifting and peeling from the edges. The glass transition point (Tg) of ingredient (b) is preferably 75°C or higher. The high-temperature adhesive strength near the Tg can be increased as the Tg is higher, but when the Tg is too high, the room-temperature adhesiveness may drop and peeling may become more likely, or the temperature for thermocompression bonding becomes higher than necessary; therefore, the Tg is preferably 250°C or lower, and more preferably from 80°C to 120°C.

A (meth)acrylic polymer having a glass transition point (Tg) of 75°C or higher can be easily provided by using as a main ingredient a monomer with which the Tg of a homopolymer thereof becomes 75°C or higher. Examples of such monomers include methyl methacrylate, ethyl methacrylate, tert-butyl methacrylate, cyclohexyl methacrylate, isobornyl (meth)acrylate, and cyclopentanyl (meth)acrylate.

Because ingredient (b) is an amino group-containing (meth)acrylic polymer and the compatibility with ingredient (a) is favorable, phase separation between ingredient (a) and ingredient (b) can be prevented or suppressed. By the fact the ingredient (a) and ingredient (b) are favorably compatible, a desired heated adhesiveness or hot adhesiveness and/or hot holding strength are effectively achieved. In order to obtain the desired compatibility effect, the quantity of amino groups contained in the (meth)acrylic polymer of ingredient (b) is preferably such that the ratio of the number of repeating units containing the amino groups to the total number of repeating units of the polymer is from 3.5% to 15% (the quantity of carboxyl groups may also be expressed as mol%).

Specific examples of amino group-containing unsaturated monomers constituting the amino group-containing (meth)acrylic polymer on being copolymerized with the above monoethyleneic unsaturated monomer include monomers having a tertiary amino group, represented by: N,N-dimethylaminoethyl acrylate (DMAEA), N,N-dimethylaminoethyl methacrylate (DMAEMA), and other dialkylaminoalkyl (meth)acrylates; N,N-dimethylaminopropyl acrylamide (DMAPAA), N,N-dimethylaminopropyl methacrylamide, and other dialkylaminoalkyl (meth)acrylamides; and vinyl imidazole and other vinyl monomers having nitrogen-containing heterocyclic rings.

The molecular weight of the amino group-containing (meth)acrylc polymer of ingredient (a) is not particularly limited, but generally can be from about 10,000 to about 200,000 or from about 40,000 to about 150,000 in weight average molecular weight. When the weight average molecular weight is small, the hot adhesiveness and/or hot holding strength are inferior, and when large, the compatibility tends to drop, but there is no limit in particular provided that the polymer satisfies the conditions for ingredient (b).

The quantities of ingredient (a) and ingredient (b) are preferably prescribed as quantities such that the compounding ratio of ingredient (a) to ingredient (b) is from 62:38 to 75:25 by mass ratio. When the quantity of ingredient (a) is less than this, the room-temperature adhesiveness and the heated adhesiveness are insufficient, and when greater than this, ingredient (b) is insufficient and the hot adhesiveness and/or hot holding strength tend to be insufficient. When ingredient (b) is less than this, the hot adhesiveness and/or hot holding strength are insufficient, and when greater than this, the wettability of the adhesive on the surface of the adherend drops, and the room-temperature adhesiveness and heated adhesiveness tend to be insufficient. A more preferable compounding ratio of ingredient (a) to ingredient (b) is in a range of 65:35 to 70:30 by mass ratio.

The (meth)acrylic polymer can be obtained by radical polymerization, and solution polymerization, suspension polymerization, emulsion polymerization, block polymerization, and other publicly known processes can be used. Examples of polymerization initiators that can be used include organic peroxides such as benzoyl peroxide, lauroyl peroxide, and bis(4-tert-butylcyclohexyl) peroxydicarbonate, and azo-based polymerization initiators including 2,2'-azobis-isobutyronitrile, 2,2'-azobis-2-methylbutyronitrile, 4,4'-azobis-4-cyanovaleric acid, dimethyl 2,2'-azobis(2-methylpropionate), and azobis-2,4-dimethylvaleronitrile (AVN). The quantity of polymerization initiator used can be from 0.05 to 5 parts by mass per 100 parts by mass of the monomer blend.

Plasticizers, crosslinking agents (for example, crosslinking agents having epoxy-based, aziridine-based, isocyanate-based, or bisamide-based functional groups), antioxidants, ultraviolet absorbers, pigments, fillers, and other additives can be further added as needed to the adhesive of the adhesive layer of the present embodiment.

The thickness of the adhesive layer of the present embodiment is not particularly limited, but can be about 5 $\mu$m or higher or about 10 $\mu$m or higher and about 100 $\mu$m or lower or about 80 $\mu$m or lower.

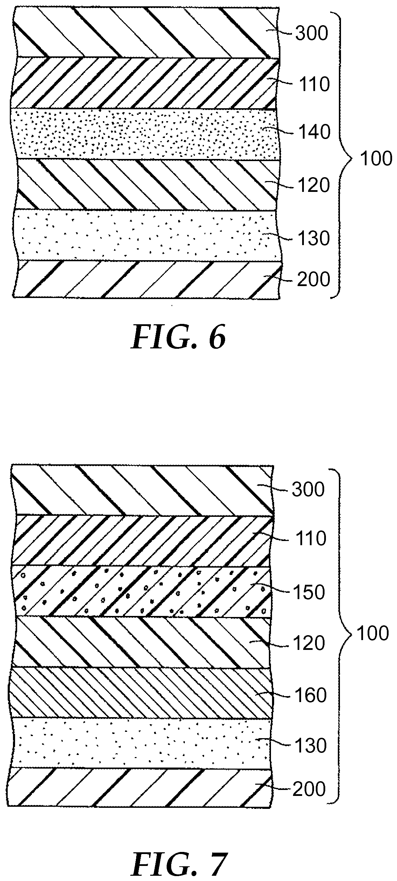

The laminated sheet of the present embodiment includes a surface layer disposed on an outermost surface, a heat moldable resin layer, and an adhesive layer to be adhered to a substrate, but as illustrated in FIG. 6, a separate second adhesive layer 140 may be disposed between the surface layer and the heat moldable resin layer in order to increase the adhesive strength between these two layers. As illustrated in FIG. 7, a printed layer, colored layer, or other decorative layer 150 or metal layer 160 may be disposed between the surface layer and the adhesive layer for the purpose of providing decorative or design characteristics and the like to the laminated sheet. Also, a primer may be applied as needed in order to increase the adhesive strength between the layers.

For example, if the decorative layer 150 is a pattern, it may be formed by using gravure direct printing, gravure offset printing, screen printing, or other printing method, or gravure coating, roll coating, comma coating, or other coating method. The decorative layer 150 may be colored by printing, or the like, or the decorative layer 150 may be applied with grain patterns, geometric patterns, leather patterns, or various other kinds of decorative patterns.

The metal layer 160 can be formed by vacuum deposition, sputtering, ion plating, metal plating, or the like. Aluminum, nickel, gold, platinum, chromium, iron, copper, tin, indium, silver, titanium, lead, zinc, germanium, and other metals and alloys thereof, or compounds thereof, including zinc sulfide, silicon oxide, magnesium fluoride, tin oxide, and ITO can be used in accordance with the required metallic tone. For example, if a vapor deposition layer of indium or tin having a film thickness of 10 to 100 nm, and more preferably 40 to 60 nm is used, the occurrence of cracking can be suppressed, even against local stretching caused in the laminated sheet during affixing of the laminated sheet to the substrate.

Pigments or beads may be added to the heat moldable resin layer or the adhesive layer, and that layer itself can be used as a decorative layer, in the same manner as in the case when the surface layer itself is used as a decorative layer.

The process for production of the laminated sheet of the present embodiment is not particularly limited. Each layer may be produced following the process for production of each layer already described. In the production of a laminated sheet, the laminated sheet can be produced, for example, by respectively preparing a formation of a surface layer on a PET film or other support sheet or release sheet having a release treated surface, a formation of a heat moldable resin layer, and a formation of an adhesive layer, and then affixing these layers together. Alternatively, a laminated sheet may be formed by iterating a coating process and a curing process on a single release sheet (support sheet) and successively laminating a surface layer, a heat moldable resin layer, and another decorative layer, and affixing the product with an adhesive layer formed on a separate release sheet. Furthermore, a second adhesive layer may be formed between the surface layer and the heat moldable resin layer before affixing the layers together. Alternatively, a primer layer may be formed in order to increase the adhesiveness between the layers. Moreover, a decorative layer or a metal layer may be formed between the layers. The support sheet or release sheet used here is not limited as to the material provided that the layer formed on the sheet can be easily peeled during use, and release treated paper or PET or other plastic films can be used.

The laminated sheet of one embodiment of the present invention obtained in this manner has an extensibility of 300% by area or higher at 120°C. Therefore, a part can be provided, in which the laminated sheet is not subject to breaking or cracking even in the case when great stretching of 300% by area or higher or 400% by area or higher has occurred locally when performing wrap-in covering on the edge parts of the substrate by vacuum thermocompression bonding. Here, "100% by area" signifies an area the same as the area of the sheet before stretching, and "the sheet area after stretching is 300% by area" refers to the state in which the laminated sheet reaches an area of about 3 times, for example, a state when stretched to 1.73 times both vertically and horizontally.

FIG. 2 is a sectional view schematically illustrating the structure of a part affixed with the laminated sheet of the present embodiment. As illustrated in FIG. 2, on the part 400, the laminated sheet 100 of the present embodiment described above is affixed on the surface of the substrate 410. Vacuum thermocompression bonding can be used advantageously as the method for affixing to the substrate. The shape of the substrate 410 is not limited to a board form as illustrated in FIG. 2, and the substrate may be a molded body having a more complex three-dimensional structure. The material of the molded body is not particularly limited, and plastic, metal, wood, or the like, can be used provided that the material has heat resistance at the temperature of affixing.

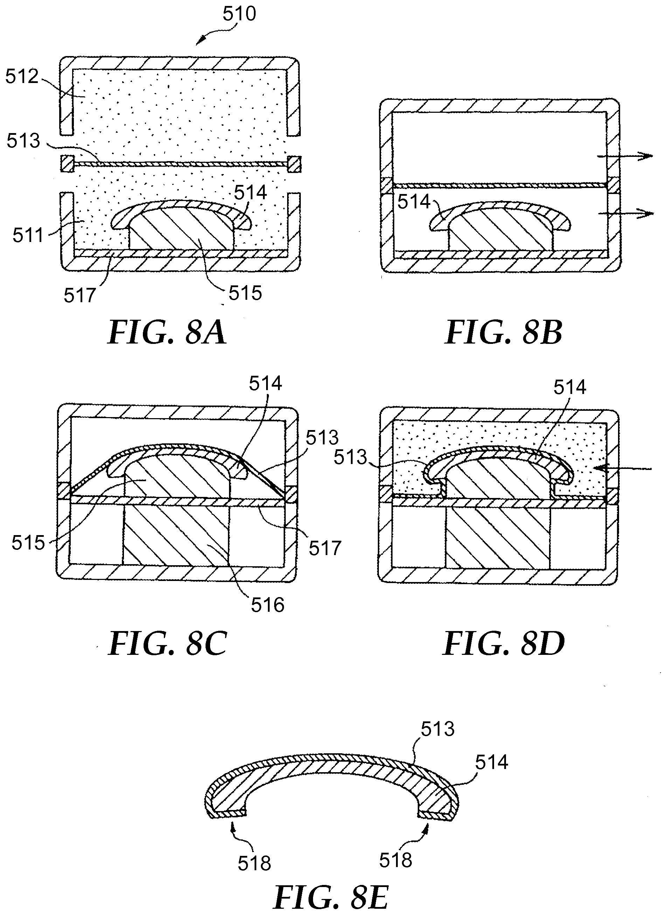

A process for production of the part of the present embodiment using vacuum thermocompression bonding, that is, a process for affixing the laminated sheet using a vacuum thermocompression bonding apparatus 510, is described below as an example while referring to FIGS. 8A to 8D.

As illustrated in FIG. 8(A), the exemplary vacuum thermocompression bonding apparatus 510 has a first vacuum chamber 511 and a second vacuum chamber 512 above and below, and a jig (not illustrated) for setting a laminated sheet to be affixed on a substrate 514 that is an adherend is provided between the upper and lower vacuum chambers. Moreover, a partition plate 517 and a platform 515 are placed on a lift table (not illustrated) that is capable of ascending and descending in the lower first vacuum chamber 511, and the substrate 514 of the part is set on this platform 515. A commercially available product of such vacuum thermocompression bonding apparatus, for example, a two-sided vacuum molding machine (manufactured by Fu-se Vacuum Forming Co., Ltd.), may be used.

As illustrated in FIG. 8(A), first, the laminated sheet 513 is set between the upper and lower vacuum chambers in a state in which the first vacuum chamber 511 and the second vacuum chamber 512 of the vacuum thermocompression bonding apparatus 510 are open to atmospheric pressure. The substrate 514 is set on the platform 515 in the first vacuum chamber 511.

Next, as illustrated in FIG. 8(B), the first vacuum chamber 511 and the second vacuum chamber 512 are closed, the respective [chambers] are depressurized, and a vacuum (for example, to -1 atm in the case when atmospheric pressure is 0 atm) is drawn inside each chamber. The sheet is heated thereafter or simultaneously with drawing of the vacuum. Next, as illustrated in FIG. 8(C), the lift table 516 is raised and the substrate 514 is pushed up to the second vacuum chamber 512. The heating can be performed, for example, using a lamp heater built into a ceiling part of the second vacuum chamber 512.

The heated laminated sheet 513 is pushed against the surface of the substrate 514 and is stretched. After that, or simultaneously with the stretching, the inside of the second vacuum chamber 512 is pressurized to a suitable pressure (for example, from 2 atm to 0 atm) as illustrated in FIG. 8(D). The laminated sheet 513 is firmly adhered to the exposed surface of the substrate 514 by the pressure difference, stretches following the shape of the surface roughness of the exposed surface, and forms a tightly adhered covering on the substrate surface. At this time, wrap-in covering can be performed, in which the laminated sheet 513 turns in to the inner surface 518 at the edge part of the substrate 514 and neatly covers the exposed surface (see FIG. 8(E)). After performing depressurization and heating in the state in FIG. 8(B), the inside of the second vacuum chamber 512 can be pressurized in that state, and the exposed surface of the substrate 514 can be covered with the laminated sheet 513.

After this, the upper and lower first vacuum chamber 511 and second vacuum chamber 512 are again opened to atmospheric pressure, and the substrate 514 covered with the laminated sheet 513 is removed. As illustrated in FIG. 8(E), the edges of the laminated sheet 513, which is closely adhered to the surface of the substrate 514, are trimmed, and thereby the vacuum/compressed-air molding step is completed.

Vacuum molding can be performed using the same kind of apparatus as the apparatus used in vacuum/compressed-air molding, except that there is no second vacuum chamber. For example, according to vacuum molding, the pressure on the side of the laminated sheet where the substrate is not present is always at atmospheric pressure, the laminated sheet is heated in a state in which the first vacuum chamber is open to atmospheric pressure, and the first vacuum chamber is depressurized after placing the laminated sheet in contact with the substrate or simultaneously with the contact, whereby the laminated sheet can be applied on the substrate.

Setting of the temperature of heating of the vacuum thermocompression bonding apparatus can be suitably determined within a range that does not adversely affect the substrate and the laminated sheet; for example, the temperature can be set to about 80°C or higher or about 90°C or higher, and about 160°C or lower or about 140°C or lower, for example to 120°C. When the degree of vacuum in the depressurization process in vacuum/compressed-air molding is drawn closer to a vacuum, a favorable external appearance can be obtained because air blockage at the time of affixing tends not to occur, and/or an outline (trace) where air escaped after having once been blocked tends not to be produced. As an example of the degree of vacuum in the depressurization process in vacuum/compressed-air molding, when the atmospheric pressure during application of the laminated sheet is 0.00 atm and the complete vacuum state is -1.00 atm, about 0.85 atm or lower is preferable, about -0.925 atm or lower is more preferable, and about -0.97 atm or lower is even more preferable.

A part affixed with a laminated sheet by vacuum thermocompression bonding includes a portion where stretching reaches about 300% by area or about 400% by area near the edge part of the substrate. With a part using the laminated sheet of the present embodiment, a favorable external appearance can be obtained, in which there is no cracking or breaking of the laminated sheet even in response to such stretching. Moreover, according to one embodiment of the present invention, a surface having chemical resistance corresponding to the intended use can be provided on the part. Such part can be used as exterior parts or interior parts of automobiles, parts of home electric appliances, parts for cars (railroad cars and the like), construction materials, and the like.

[Working Examples] examples 6 to 8 are examples of the invention

The present invention is described more specifically below using working examples, but the present invention is not limited to these working examples.

Abbreviations used in Tables 1 and 2 below are as follows.

MMA: methyl methacrylate (manufactured by Mitsubishi Rayon Co., Ltd., product name: ACRYESTER M)
BMA: n-butyl methacrylate (manufactured by Mitsubishi Rayon Co., Ltd., product name: ACRYESTER B)
MAA: methacrylic acid (manufactured by Mitsubishi Rayon Co., Ltd.)
DMAA: N,N-dimethyl acrylamide (manufactured by Kohjin Co., Ltd.)
HEMA: 2-hydroxyethyl methacrylate (manufactured by Mitsubishi Rayon Co., Ltd., product name: ACRYESTER HISS)
CHMA: cyclohexyl methacrylate (manufactured by Mitsubishi Rayon Co., Ltd., product name: ACRYESTER CH)
2EHMA: 2-ethylhexyl methacrylate (manufactured by Mitsubishi Rayon Co., Ltd., product name: ACRYESTER EH)
STMA: stearyl methacrylate (manufactured by Mitsubishi Rayon Co., Ltd., product name: ACRYESTER S)
IBX: isobornyl methacrylate (manufactured by Mitsubishi Rayon Co., Ltd., product name: ACRYESTER IBX)
NCO: isocyanate crosslinking agent (manufactured by Asahi Kasei Corporation, product name: DURANATE TPA-100)
Epoxy: epoxy crosslinking agent (manufactured by Soken Chemical & Engineering Co., Ltd., product name: E-5XM)

Example 1

The laminated sheet of example 1 was prepared by the following procedure.

95 parts by mass of methyl methacrylate (MMA), 4 parts by mass of methacrylic acid (MAA), 1 part by mass of 2-hydroxyethyl methacrylate (HEMA) as a hydroxyl group-containing monomer, 150 parts by mass of ethyl acetate as a solvent, and 0.6 parts by mass of dimethyl-2,2'-azobis(2-methylpropionate) (manufactured by Wako Pure Chemicals Industries, Ltd., product name: V-601) were mixed, a polymerization reaction was carried out for 24 hours at a temperature of 65°C in a nitrogen atmosphere, and a solution of a (meth)acrylic copolymer in ethyl acetate was obtained.

An isocyanate crosslinking agent (NCO) was mixed in the obtained (meth)acrylic copolymer solution so that the isocyanate groups became 15.0 mmol per 100 g as a solid mass ratio, and the mixture was applied by knife-coating on the surface of a flat, transparent PET film of a thickness of about 50 $\mu$m (manufactured by Toray Industries, Inc., product name: T-60) as a support sheet. This coated film was desiccated in an oven (constant-temperature machine PV-221, manufactured by Espec Corp.) for a total of 8 minutes, 3 minutes at 90°C and then 5 minutes at 120°C, and a sheet A was prepared, on which a surface layer of a thickness of about 30 $\mu$m was formed on the PET film.

Table 1 lists the ratios of parts by mass of the MMA, MAA, and HEMA used for preparing the acrylate copolymer of example 1, and the glass transition point (Tg) of the surface layer. The glass transition point (Tg) can also be sought by using an RSA-III manufactured by Rheometric Scientific, Inc. and measuring the peak temperature on the loss tangent (tan delta) (loss modulus E'' / storage modulus E') with Mode: Tension, Frequency: 10.0 Hz, and temperature: 30°C to 150°C (5.0°C/minute), however, the Tg was sought using the following computational formula in the present working examples and comparative examples. The glass transition point (Tg) of the homopolymer of each monomer is taken from the catalog value.

<Computational formula of Tg>

Setting of the glass transition point (Tg) of the polymer was performed by setting the mass ratios of the monomers constituting the copolymer, following the Fox formula below (Fox, T.G., Bull. Am. Phys. Soc., 1, in 1956, p. 123).

[Equation 1]

$$1/Tg = (W1/Tg1) + (W2/Tg2) + ... + (Wm/Tgm) \quad W1 + W2 + ... + Wm = 1$$

In the formula, Tg expresses the glass transition point of the copolymer, and Tg1, Tg2, ..., Tgm express the glass transition points of the homopolymers obtained by singly polymerizing the respective monomers. Also, W1, W2, ..., Wm express the mass ratios of the monomers constituting the copolymer. Here, the computation was performed with the glass transition point (Tg) of the copolymer as the glass transition point of the surface layer, the glass transition temperatures of the respective homopolymers of MMA, MAA, and HEMA as Tg1, Tg2, and Tg3, the mixture ratio converted to % by mass as W1, W2, and W3, and m = 3.

An aqueous polyurethane resin (manufactured by Dainichiseika Color & Chemicals Mfg. Co., Ltd., product name: D-6260) was applied by knife-coating on the surface layer of the sheet A that is the support body. This coated sheet was desiccated in an oven (constant-temperature machine PV-221, manufactured by Espec Corp.) for a total of 8 minutes, 3 minutes at 90°C and then 5 minutes at 120°C, and a sheet B was prepared, on which a polyurethane resin layer of a thickness of about 35 $\mu$m, that is, a heat moldable resin layer, was formed on the surface layer of the PET film.

n-butyl acrylate (BA) and acrylic acid (manufactured by Toagosei Co., Ltd. were mixed to reach a ratio of parts by mass of 94:6, and a carboxyl group-containing acrylic polymer solution (ingredient (a)) of Tg = -21°C, carboxyl group content 10.2 mol%, and weight average molecular weight 580,000 was obtained. Meanwhile, MMA, BMA, and N,N-dimethylaminoethyl methacrylate (DMAEMA, manufactured by Mitsubishi Rayon Co., Ltd., product name: ACRYESTER DM) were mixed to a ratio of parts by mass of 60:34:6, and an amino group-containing acrylic polymer solution (ingredient (b)) of Tg = 91°C, amino group content 4.4 mol%, and weight average molecular weight 96,000 was obtained. After this, the carboxyl group-containing acrylic polymer solution (ingredient (a)) and the amino group-containing acrylic polymer solution (ingredient (b)) were mixed at a solid mass ratio of 70:30, an epoxy-based crosslinking agent (manufactured by Soken Chemical & Engineering Co., Ltd., product name: E-5XM) was further added as a crosslinking agent in a solid portion ratio of 0.1% by mass per total solid portion of the polymer, and an adhesive solution was prepared.

The above adhesive solution was applied on the resin surface of sheet B, the coated sheet was desiccated for 20 minutes at 100°C, further heated for 30 minutes at 120°C, and thereby an adhesive layer having a thickness of about 40 $\mu$m was formed. After that, a 50 $\mu$m thick polypropylene resin film (manufactured by Mitsui Chemicals Tohcello Inc., product name: Unstretched polypropylene film S) prepared as a release sheet was affixed together with the adhesive surface, and a laminated sheet having a laminated structure corresponding to FIG. 3 was obtained.

<Examples 2 to 17>

The laminated sheet of each example was prepared by the same procedure as in Example 1. Tables 1 and 2 list the ratios of parts by mass of MMA, BMA, MAA, N,N-dimethyl acrylamide (DMAA), HEMA, cyclohexyl methacrylate (CHMA), 2-ethylhexyl methacrylate (2EHMA), stearyl methacrylate (STMA), and isobornyl methacrylate (IBX), and the glass transition point (Tg) of the surface layer in the preparation of sheet A, that is, the preparation of the surface layer, in each example. In Example 4, an epoxy crosslinking agent (Epoxy) was used in place of NCO as a crosslinking agent, and was mixed in the (meth)acrylic copolymer solution to 15.0 mmol per 100 g as solid mass ratio. In Examples 10 and 16, the mixture ratios of the crosslinking agent (NCO) to the (meth)acrylic copolymer were changed as listed in Table 2.

<Example 18>

The laminated sheet in Example 18 was prepared by preparing three sheets, that is, a sheet A' including a surface layer, a sheet B' including a heat moldable resin layer, and a sheet C' including an adhesive layer, under the following conditions, and affixing these sheets together.

The sheet A prepared in Example 11 was used as the sheet A'.

An aqueous polyurethane resin (manufactured by Dainichiseika Color & Chemicals Mfg. Co., Ltd., product name: D-6260) was applied by knife-coating on the surface of a flat, transparent PET film of a thickness of about 50 $\mu$m (manufactured by Toray Industries, Inc., product name: T-60) as a support sheet. This coated sheet was desiccated in an oven (constant-temperature machine PV-221, manufactured by Espec Corp.) for a total of 8 minutes, 3 minutes at 90°C and then 5 minutes at 160°C, and a sheet B' was prepared, on which a polyurethane resin layer of a thickness of about 30 $\mu$m, that is, a heat moldable resin layer, was formed on the surface layer of the PET film.

A 38 $\mu$m thick release treated PET film (manufactured by Teijin Limited, product name: Purex (registered trademark) A-71) was prepared as a release sheet, the adhesive solution prepared in Example 1 was applied thereon, the coated film was dried for 20 minutes at 100°C, further heated for 30 minutes at 120°C, and a sheet C' was obtained thereby, on which a 40 $\mu$m thick adhesive layer was formed on the PET film.

The adhesive layer of sheet C' was affixed together with the polyurethane resin layer (heat moldable resin layer) of sheet B' at about 70°C, and a laminate of the heat moldable resin layer and the adhesive layer was prepared.

A polyester resin (manufactured by Dainichiseika Color & Chemicals Mfg. Co., Ltd., product name: E-295NT) and a polyisocyanate (manufactured by Dainichiseika Color & Chemicals Mfg. Co., Ltd., product name: C-55) were compounded to a mass ratio of 10:0.3, and a urethane-based adhesive was prepared. A coating of this urethane-based adhesive was applied to a thickness of 15 $\mu$m on the surface layer of the sheet A', and a second adhesive layer was formed.

One PET film was removed from the laminate of sheet B' and sheet C' previously obtained, exposing the polyurethane resin layer, this exposed surface and the second adhesive layer formed on sheet A' were affixed together, and a laminated sheet having a laminated structure corresponding to FIG. 6 was obtained.

<Comparative example 1>

A laminated sheet was prepared by the same procedure as in Example 1. However, as listed in Table 1, when preparing the (meth)acrylic copolymer of the surface layer, MMA was prescribed as 97 parts by mass, HEMA was prescribed as 3 parts by mass, and MAA was not used.

<Evaluation method>

The laminated sheet of each example and the comparative example was evaluated by the following methods with respect to (1) adhesiveness, (2) heated impression recovery ability, (3) stretch ratio, and (4) chemical resistance.

(1) Adhesiveness

The PET sheet (support sheet) covering the surface layer of the sheet and the PET film (release sheet) covering the adhesive layer are peeled apart, and then the adhesive layer surface is affixed to a 2 mm thick ABS resin plate (manufactured by Coating Tester Industry Co., Ltd.) at 135°C using a vacuum thermoforming apparatus. Checkerboard-form cuts are applied on the film surface using a cutter knife, drawing parallel lines at 1 mm intervals between 11 intersecting vertical and horizontal lines so that 100 squares appear. Adhesive tape (Nichiban Cello tape (registered trademark)) is adhered to this checkerboard-form portion at room temperature, the tape is grabbed at one end and rapidly peeled upward, and the presence or absence of peeling is confirmed. Those in which not one of the 100 squares was peeled are rated as "OK," and those in which one or more was peeled are rated as "NG."

(2) Heated impression recovery ability

The PET film (release sheet) covering the adhesive layer of the laminated sheet is removed, and then the adhesive layer surface is affixed to a 2 mm thick ABS resin plate (manufactured by Coating Tester Industry Co. Ltd. at 135°C; the PET film (support sheet) covering the surface layer is removed, and then curing is performed for 10 minutes at 80°C and for 10 minutes further at 100°C, and the resulting product is used as a test sample. 5 sheets of pharmaceutical gauze are piled on the sample and a 1 kg weight is placed thereon in a 60°C environment, the weight and the pharmaceutical gauze are removed after 1 hour, and the presence or absence of impressions of the gauze remaining on the surface of the test sample is confirmed by visual observation. The results are evaluated on the following 2 levels.

> OK: Impressions of gauze are not confirmed.
> NG: Impressions of gauze remain partially or on the entire surface.

(3) Stretch ratio

Three ISO 34 type 2 dumbbell tensile test pieces are punched out from the vertical and horizontal directions of the specimen, and marks at 40 mm intervals are recorded in the center of the test piece in the length direction. This test piece is attached to a tensile testing machine and is drawn at a rate of 200 mm/minute at a temperature of 120°C, the distance between marks at the time of breakage until the test piece breaks is measured, and the stretch ratio is calculated. Stretch ratio (%) = (distance between marks at time of breakage (mm) - 40) / 40 x 100

(4) Chemical resistance

A polyethylene cylinder having an inner diameter of 38 mm and a height of 15 mm is placed on the test piece, and is firmly adhered to the test piece by a rubber band or other suitable compression bonding device, and 5 mL of a test solution is dripped in the opening of the cylinder. The opening is covered with a glass plate or a polyethylene plate. The compression bonding device is removed after setting aside for a prescribed time at a prescribed temperature. The test plate is washed with water and wiped off, and then the condition (discoloration, luster, wrinkles, splitting, swelling, peeling, and the like) of the surface on which the test solution was dripped is observed. Those in which no change in appearance is observed are rated as OK, and those in which there is a change are rated as NG. The chemicals used and the test conditions are as follows.

50% ethanol (EtOH): 55°C X 4 hours
dioctyl phthalate (DOP): 80°C X 72 hours

[Table 1]

| | (Meth)acrylic monomer (parts by mass) | | | | | | Tg(°C) | Crosslinking agent | Adhesiveness | Hot impression recovery ability | Stretch ratio (%) |
|---|---|---|---|---|---|---|---|---|---|---|---|
| | MMA | BMA | MAA | DMAA | HEMA | CHMA | | | | | |
| Example 1 | 95 | | 4 | | 1 | | 108 | NCO | OK | OK | 567 |
| Comparative Example 1 | 97 | | | | 3 | | 103 | NCO | NG | OK | 525 |
| Example 2 | 96 | | 1 | | 3 | | 104 | NCO | OK | OK | 625 |
| Example 3 | 87 | | 10 | | 3 | | 113 | NCO | OK | OK | 575 |
| Example 4 | 96 | | 4 | | | | 109 | Epoxy | OK | OK | 575 |
| Example 5 | 60 | 36 | 4 | | 1 | | 72 | NCO | OK | NG | 692 |
| Example 6 | 82 | | | 15 | 3 | | 105 | NCO | OK | OK | 592 |
| Example 7 | 98 | | | 5 | 3 | | 104 | NCO | OK | OK | 550 |
| Example 8 | 87 | | | 10 | 3 | | 105 | NCO | OK | OK | 642 |
| Example 9 | 45 | | 4 | | 3 | 48 | 96 | NCO | OK | OK | 433 |
| Example 10 | 69 | | 4 | | 3 | 24 | 101 | - | OK | OK | 475 |

[Table 2]

| | (Meth)acrylic monomer (parts by mass) | | | | | | | | NCO (mmol) | Tg (°C) | Chemical resistance | | Stretch ratio (%) |
|---|---|---|---|---|---|---|---|---|---|---|---|---|---|
| | MMA | BMA | MAA | HEMA | CHMA | 2EHMA | STMA | IBX | | | 50% E tOH | DOP | |
| Example 1 | 95 | | 4 | 1 | | | | | 15 | 108 | NG | OK | 567 |
| Example 11 | 69 | | 4 | 3 | 24 | | | | 15 | 101 | OK | OK | 442 |
| Example 9 | 45 | | 4 | 3 | 48 | | | | 15 | 96 | OK | NG | 433 |
| Example 12 | 87 | | 4 | 3 | | | 6 | | 15 | 82 | OK | OK | 542 |
| Example 13 | 77 | | 4 | 3 | | 16 | | | 15 | 82 | OK | OK | 508 |
| Example 14 | 78 | 15 | 4 | 3 | | | | | 15 | 91 | NG | OK | 525 |
| Example 15 | 68 | | 4 | 3 | | 25 | | | 15 | 69 | OK | NG | 392 |
| Example 16 | 69 | | 4 | 3 | 24 | | | | 30 | 101 | OK | OK | 225 |
| Example 10 | 69 | | 4 | 3 | 24 | | | | 0 | 101 | NG | NG | 475 |
| Example 17 | 83 | | 4 | 3 | | | | 10 | 15 | 112 | OK | OK | 467 |

## Claims

1. A laminated sheet for affixing to a substrate, the laminated sheet comprising a surface layer disposed on an outermost surface, a heat moldable resin layer, and an adhesive layer to be adhered to the substrate, the surface layer containing a (meth)acrylic copolymer obtained by copolymerizing a monomer blend containing an alkyl (meth)acrylate having an alkyl group having 1 to 4 carbon atoms and one or more kind of (meth)acrylic monomer expressed by formula (1):

$$CH_2=CR^1COR^2 \qquad (1),$$

wherein $R^1$ is a hydrogen atom or a methyl group, and $R^2$ is a nitrogen-containing group, and the surface layer is in direct contact with the resin layer containing an aqueous polyurethane resin.

2. The laminated sheet according to claim 1, wherein $R^2$ in equation (1) is 2. a nitrogen-containing group having active hydrogen.

3. The laminated sheet according to claim 1 or 2, wherein the monomer blend further contains a hydroxyl group-containing monomer, and the surface layer contains the (meth)acrylic copolymer crosslinked by an isocyanate compound having 2 or more isocyanate groups per molecule.

4. The laminated sheet according to any one of claims 1 to 3, wherein the laminated sheet has an extensibility of 300% by area or higher at 120°C.

5. The laminated sheet according to any one of claims 1 to 4, wherein at least one layer of a decorative layer or a metal layer is included between the surface layer and the adhesive layer.

6. The laminated sheet according to any one of claims 1 to 5, wherein the laminated sheet is affixed to the substrate by a process of vacuum thermocompression bonding.

7. A process for production of a part, including a step in which a laminated sheet according to any one of claims 1 to 6 is affixed by a process of vacuum thermocompression bonding on a surface of a substrate of a part having that substrate.

8. The process for production of a part according to claim 7, wherein the laminated sheet is at least partially stretched to 300% by area or higher.

9. A part comprising a laminated sheet according to any one of claims 1 to 6 affixed on a surface of a substrate of a part having that substrate.

10. The part according to claim 9, wherein the part is an exterior part of an automobile or an interior part of an automobile.


## Patentansprüche

1. Eine Verbundfolie zur Befestigung an einem Substrat, wobei die Verbundfolie eine Oberflächenschicht, die auf einer äußersten Oberfläche angeordnet ist, eine wärmeformbare Harzschicht und eine Klebstoffschicht, die an das Substrat angehaftet werden soll, umfasst, wobei die Oberflächenschicht ein (Meth)acrylcopolymer enthält, das durch Copolymerisieren einer Monomermischung erhalten wird, die ein Alkyl(meth)acrylat mit einer Alkylgruppe mit 1 bis 4 Kohlenstoffatomen und eine oder mehrere einer Art von (Meth)acrylmonomer, ausgedrückt durch Formel (1), erhält:

$$CH_2=CR^1COR^2 \qquad (1),$$

wobei $R^1$ ein Wasserstoffatom oder eine Methylgruppe ist und $R^2$ eine stickstoffhaltige Gruppe ist und die Oberflächenschicht in direktem Kontakt mit der Harzschicht ist, die ein wässriges Polyurethanharz enthält.

2. Die Verbundfolie nach Anspruch 1, wobei $R^2$ in Gleichung (1) eine stickstoffhaltige Gruppe mit aktivem Wasserstoff ist.

3. Die Verbundfolie nach Anspruch 1 oder 2, wobei die Monomermischung ferner ein hydroxylgruppenhaltiges Monomer enthält und die Oberflächenschicht das (Meth)acrylcopolymer enthält, das durch eine Isocyanatverbindung mit 2 oder mehr Isocyanatgruppen pro Molekül vernetzt ist.

4. Die Verbundfolie nach einem der Ansprüche 1 bis 3, wobei die Verbundfolie eine Dehnbarkeit von 300 % der Fläche oder mehr bei 120 °C aufweist.

5. Die Verbundfolie nach einem der Ansprüche 1 bis 4, wobei mindestens eine Schicht einer dekorativen Schicht oder einer Metallschicht zwischen der Oberflächenschicht und der Klebstoffschicht eingeschlossen ist.

6. Die Verbundfolie nach einem der Ansprüche 1 bis 5, wobei die Verbundfolie durch einen Prozess der Vakuumthermokompressionsbindung an dem Substrat befestigt wird.

7. Ein Verfahren zur Herstellung eines Teils, das einen Schritt einschließt, in dem eine Verbundfolie nach einem der Ansprüche 1 bis 6 durch einen Prozess der Vakuumthermokompressionsbindung an einer Oberfläche eines Substrats eines Teils, das dieses Substrat aufweist, befestigt wird.

8. Das Verfahren zur Herstellung eines Teils nach Anspruch 7, wobei die Verbundfolie mindestens teilweise auf 300 % der Fläche oder mehr gedehnt wird.

9. Ein Teil, umfassend eine Verbundfolie nach einem der Ansprüche 1 bis 6, die an einer Oberfläche eines Substrats eines Teils, das dieses Substrat aufweist, befestigt ist.

10. Das Teil nach Anspruch 9, wobei das Teil ein Außenteil eines Automobils oder ein Innenteil eines Automobils ist.


**Revendications**

1. Feuille stratifiée pour fixation à un substrat, la feuille stratifiée comprenant une couche de surface disposée sur une surface externe, une couche de résine thermomoulable, et une couche adhésive destinée à être fixée par adhérence au substrat, la couche de surface contenant un copolymère (méth)acrylique obtenu par copolymérisation d'un mélange de monomères contenant un (méth)acrylate d'alkyle ayant un groupe alkyle ayant 1 à 4 atomes de carbone et un ou plusieurs types de monomère (méth)acrylique exprimés par la formule (1) :

$$CH_2=CR^1COR^2 \qquad (1),$$

dans laquelle $R^1$ est un atome d'hydrogène ou un groupe méthyle, et $R^2$ est un groupe contenant de l'azote, et la couche de surface est en contact direct avec la couche de résine contenant une résine polyuréthane aqueuse.

2. Feuille stratifiée selon la revendication 1, dans laquelle $R^2$ dans l'équation (1) est un groupe contenant de l'azote ayant un hydrogène actif.

3. Feuille stratifiée selon la revendication 1 ou 2, dans laquelle le mélange de monomères contient en outre un monomère contenant un groupe hydroxyle, et la couche de surface contient le copolymère (méth)acrylique réticulé par un composé isocyanate ayant 2 groupes isocyanate ou plus par molécule.

4. Feuille stratifiée selon l'une quelconque des revendications 1 à 3, dans laquelle la feuille stratifiée a une extensibilité de 300 % en superficie ou plus à 120 °C.

5. Feuille stratifiée selon l'une quelconque des revendications 1 à 4, dans laquelle au moins une couche d'une couche décorative ou d'une couche métallique est incluse entre la couche de surface et la couche adhésive.

6. Feuille stratifiée selon l'une quelconque des revendications 1 à 5, dans laquelle la feuille stratifiée est fixée au substrat par un procédé de liaison par thermocompression sous vide.

7. Procédé de production d'une pièce, incluant une étape dans laquelle une feuille stratifiée selon l'une quelconque des revendications 1 à 6 est fixée par un procédé de liaison par thermocompression sous vide sur une surface d'un substrat d'une pièce ayant ce substrat.

8. Procédé de production d'une pièce selon la revendication 7, dans lequel la feuille stratifiée est au moins partiellement étirée à 300 % en superficie ou plus.

9. Pièce comprenant une feuille stratifiée selon l'une quelconque des revendications 1 à 6 fixée sur une surface d'un substrat d'une pièce ayant ce substrat.

10. Pièce selon la revendication 9, dans laquelle la pièce est une pièce extérieure d'une automobile ou une pièce intérieure d'une automobile.

FIG. 1

FIG. 2

FIG. 3

300

112
111 } 110

120

130

200
} 100

**FIG. 4**

113 } 110
111

120

130

200
} 100

**FIG. 5**

**FIG. 6**

**FIG. 7**

**FIG. 8A**

**FIG. 8B**

**FIG. 8C**

**FIG. 8D**

**FIG. 8E**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3956716 B
- JP 3137618 B
- JP 2010131901 A

**Non-patent literature cited in the description**

- **FOX, T.G.** *Bull. Am. Phys. Soc.,* 1956, vol. 1, 123